# FASCICULE DE BREVET EUROPEEN

(11) **EP 2 245 786 B1**
(45) Date de publication et mention de la délivrance du brevet: **28.03.2018**
(21) Numéro de dépôt: 09712831.8
(22) Date de dépôt: 20.02.2009
(51) Int. Cl.: H04L 7/04, H04J 3/06, H04L 29/08

(54) **PROCEDE ET DISPOSITIF DE DELINEATION D'UN FLUX DE DONNEES ET SYSTEME DE COMMUNICATION COMPRENANT LEDIT DISPOSITIF.**
VERFAHREN UND VORRICHTUNG ZUR AUSRICHTUNG EINES DATENSTROMES UND NACHRICHTENÜBERTRAGUNGSSYSTEM DIESE ENTHALTEND
METHOD AND DEVICE FOR DELINEATING A DATA STREAM AND COMMUNICATION SYSTEM COMPRISING SAID DEVICE

(30) Priorité: 22.02.2008 FR 0800968
(43) Date de publication de la demande: 03.11.2010
(73) Titulaire: THALES, 92400 Courbevoie (FR)
(72) Inventeur: CANTILLO, Juan, 64000 Pau (FR); LACAN, Jérôme, F-31400 Toulouse (FR); BURET, Isabelle, F-31830 Plaisance Du Touch (FR); ARNAL, Fabrice, 31270 Cugnaux (FR)
(74) Mandataire: Esselin, Sophie
(86) Numéro de dépôt international: PCT/EP2009/052059
(87) Numéro de publication internationale: WO 2009/103797

(56) Documents cités:
- EP-A- 0 915 588
- EP-A- 1 067 740
- WO-A-2008/005199
- WO-A1-02/098035
- US-B1- 6 819 679
- UEDA H ET AL: "Reducing misframe frequency for HEC-based variable length frame suitable for IP services" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 4, 11 juin 2001 (2001-06-11), pages 1196-1200, XP010553517 ISBN: 978-0-7803-7097-5
- SHARK L K ET AL: "NEW HIGH-SPEED ADAPTIVE FRAME SYNCHRONISERS INCORPORATING POSTDETECTION PROCESSING TECHNIQUES" IEE PROCEEDINGS I. SOLID- STATE & ELECTRON DEVICES, INSTITUTION OF ELECTRICAL ENGINEERS. STEVENAGE, GB, vol. 138, no. 4, 1 août 1991 (1991-08-01), pages 269-279, XP000259816 ISSN: 0956-3776

## Description

L'invention concerne un procédé de délinéation d'un flux de données transmis à travers un canal de communication. L'invention s'applique à tout système de communications numériques. L'invention s'applique aux communications par satellite et aux liaisons ATM sur ADSL.

On entend par délinéation, également appelée synchronisation paquet, l'étape consistant à déterminer dans un flux de données continu la longueur des paquets et leurs limites, indispensable en réception.

Les techniques actuelles de délinéation nécessitent l'intégrité des données. Lorsque la liaison n'est pas suffisamment fiable, on procède habituellement à une étape de correction d'erreurs de transmission avant la délinéation. En outre, les techniques actuelles imposent par exemple l'ajout d'informations telles que des informations de longueurs, des pointeurs, dans le champ utile (payload) qui consomment de la bande passante sur le flux transmis.

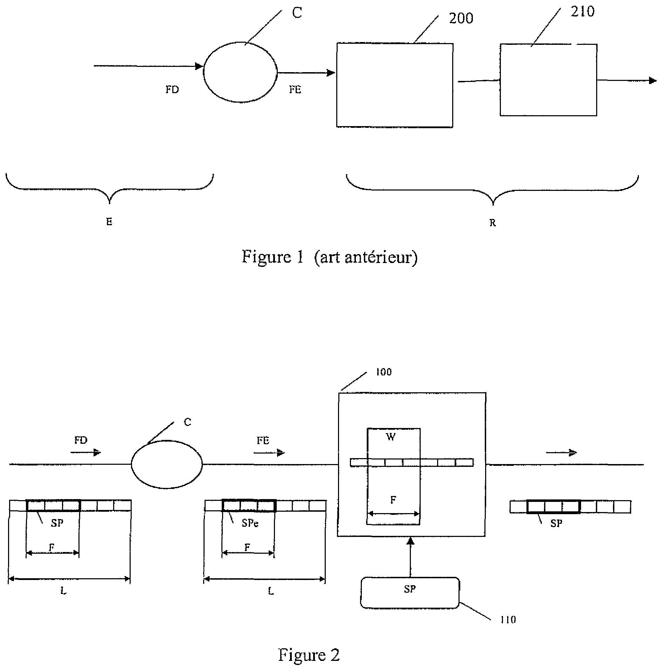

On a représenté sur la figure 1 le schéma d'un système de communication mettant en oeuvre un procédé de délinéation selon l'état de la technique. Le système de communication comporte une chaîne de transmission comprenant côté émission E, la formation du flux émis FD, un canal de communication C et côté récepteur R, le traitement du flux reçu FE. Dans la partie émission, le flux est par exemple codé par un codeur FEC puis modulé. Ce flux FD est transmis par le canal de communication C puis reçu par un récepteur destinataire R. A la réception, le flux est démodulé et décodé par un décodeur FEC 200. Le dispositif de délinéation 210 du flux est placé après la correction d'erreurs de transmission qui, dans cet exemple, est réalisée par le décodeur FEC. En effet, la technique FEC consiste pour l'émetteur à ajouter de la redondance aux données utiles afin de permettre au récepteur destinataire de détecter et de corriger une partie des inévitables erreurs de transmission.

Dans tous les cas, les techniques existantes sont basées sur le rajout de données de contrôle ou de redondance dans le flux utile et une délinéation postérieure à la correction d'erreurs de transmission car cette étape nécessite des données intègres. On peut citer à titre d'exemple, la délinéation dans les cas des protocoles MPE/MPEG2, ULE/MPEG2 ou AAL5/ATM (Unidirectional Lightweight Encapsulation (ULE); Multi Protocol Encapsulation (MPE); ATM adaptation Layer (AAL5).

La présente invention a pour but de remédier à cet inconvénient en proposant une solution de délinéation robuste sans intrusion et pouvant avoir lieu tout aussi bien sur un flux de données intègres, que sur un flux de données comportant des erreurs de transmission, sans la nécessité d'ajouter de données au flux utile transmis (i.e. ni de redondance, ni information de contrôle).

Dans le cas d'une étape de délinéation sur un flux de données intègres, c'est-à-dire au niveau où les mécanismes classiques fonctionnent, la délinéation selon le procédé de l'invention peut être faite sans ajout de redondance.

Dans le cas d'une étape de délinéation sur un flux de données sans correction d'erreurs de transmission, la délinéation peut également avoir lieu, car cette étape est, selon l'invention, découplée du besoin d'intégrité des données. Les paquets d'applications tolérantes aux erreurs comme la voix sur IP (VoIP) peuvent être transmis aux couches supérieures même en présence d'erreurs. Les couches d'adaptation telles que MPE, ULE ou GSE (Generic Stream Encapsulation) peuvent disposer avec ce procédé d'informations pour améliorer une délinéation opérée par un autre mécanisme que celui de la présente invention.

Le document WO02/098035 (IBM) divulgue une méthode de détection de protocoles, parmi eux le protocole SDH/SONET et le protocole Ethernet ou Fiber - Channel. Le document EP1067740 (Mitsubishi) divulgue un système de communication utilisant une pile de protocoles multicouches.

La présente invention a pour objet un procédé de délinéation d'un flux de données appartenant à une pile protocolaire donnée en mettant en oeuvre des techniques multicouche.

Dans les piles de protocoles, de nombreuses informations de contrôle sont répliquées dans tous les paquets appartenant aux mêmes flux logiques.

Selon l'invention, le procédé consiste à exploiter la redondance naturelle de ces flux, dont la principale manifestation est la répétition prévisible et récurrente de séquences dont le contenu est fixe, ces séquences dites connues SP étant construites à partir d'informations de contrôle caractéristiques des différentes couches de la pile protocolaire. La redondance est selon l'invention, utilisée pour délinéer le flux; le procédé consistant à cette fin à rechercher sur un flux de données reçu, les positions originales des séquences connues SP et cela par détection de séquences similaires à cette séquence connue SP, les séquences non similaires, c'est-à-dire différentes, n'étant pas retenues.

Dans la suite, il faut entendre par séquence, tout aussi bien une séquence discrète (c'est-à-dire une suite de symboles binaires ou non, résultant d'informations quantifiées), qu'une portion de signal correspondant à une séquence discrète, selon que le flux entrant est traité après démodulation ou avant. On entend par symbole binaire un bit, un symbole non binaire étant quant à lui, représenté par un groupe de bits.

La présente invention a plus particulièrement pour objet, un procédé de selon la revendication 1. L'information permettant de délinéer peut être par exemple la position d'un début de paquet ou une longueur entre deux séquences détectées.

La mémorisation de la position consiste à enregistrer la position dans le flux de séquences similaires successives afin de déduire le début de paquets.

La recherche d'une séquence connue SP dans le flux entrant comprend l'ouverture d'une fenêtre d'analyse W de longueur égale à la longueur de la séquence connue SP, le calcul d'une mesure de similitude entre une séquence analysée et la séquence connue SP, le calcul d'un seuil η portant sur la mesure de similitude, une détection d'une séquence similaire ayant lieu lorsque la similitude mesurée est supérieure ou égale au seuil η.

Dans le cas de signaux binaires, cette mesure de similitude peut correspondre par exemple à un calcul de distance de type distance de Hamming. Dans le cas des signaux analogiques réels ou quantifiés, cette mesure peut correspondre par exemple à un calcul de type corrélation.

Le seuil η est choisi de manière à obtenir une probabilité de récupération des séquences connues PSR maximale, ce seuil η correspondant alors à une estimation du seuil optimum ηₒₚₜ.

La recherche d'une séquence connue est réalisée en continu en faisant glisser la fenêtre d'analyse d'une position à chaque déplacement.

Le déplacement d'une position correspond par exemple à un déplacement symbole par symbole, ou octet par octet, ou bit par bit dans le flux entrant.

L'invention concerne également un dispositif de délinéation selon la revendication 9. Les moyens pour rechercher des séquences correspondant à la séquence connue SP et détecter des séquences similaires comportent :
- une fenêtre W de longueur égale à la longueur de la séquence connue SP, pour l'analyse dans le flux des séquences circulant dans la fenêtre,
- des moyens de calcul d'un seuil de détection η,
- des moyens de calcul d'une mesure de similitude entre une séquence analysée et la séquence connue SP et des moyens de détection d'une séquence similaire, la détection ayant lieu lorsque la similitude mesurée est supérieure ou égale au seuil η.

La fenêtre d'analyse est une fenêtre glissante se déplaçant d'une position i à une position i+1 après chaque analyse d'une séquence de longueur prédéterminée F, formée des symboles reçus indexés de i à i+F-1. Les index i et i+F-1 correspondent aux bornes min et max fixant la longueur de la fenêtre d'analyse W, lorsque la séquence SP est continue alors les bornes min et max donnent la taille de la séquence SP (la longueur F correspond à la longueur de la séquence SP).

L'invention concerne également un système de communication de flux de données comprenant une chaîne de réception principalement caractérisé en ce que ladite chaîne de réception comprend un dispositif de délinéation, tel que décrit précédemment.

Dans de tels systèmes de communication, la chaîne de réception comporte habituellement un démodulateur et un décodeur FEC effectuant une correction d'erreurs de transmission. Le dispositif de délinéation peut tout aussi bien être placé avant, ou après la correction d'erreurs.

L'invention peut s'appliquer par exemple aux systèmes de communication par satellite.

L'invention peut s'appliquer par exemple aux liaisons utilisant ATM sur ADSL.

D'autres particularités et avantages de l'invention apparaîtront clairement à la lecture de la description qui est faite ci-après et qui est donnée à titre d'exemple illustratif et non limitatif et en regard des figures sur lesquelles :
La figure 1 représente le schéma d'un système de communication d'un flux de données avec une chaîne de transmission selon l'art antérieur,
La figure 2 représente le schéma d'un dispositif de délinéation 100 placé sur une chaîne de transmission selon l'invention,
La figure 3 représente le schéma d'un système de communication d'un flux de données dans lequel le dispositif de délinéation 100 est placé avant correction d'erreurs 200A,
La figure 4 représente le schéma d'un système de communication d'un flux de données dans lequel le dispositif de délinéation 100 est placé après la correction d'erreurs 200B,
La figure 5 représente le schéma détaillé des étapes mises en oeuvre par le dispositif de délinéation selon l'invention,
La figure 6 représente la courbe de variation de la probabilité de récupération des séquences connues d'une séquence connue dans la fenêtre d'analyse en fonction du seuil de détection η, selon des conditions de bruit du canal de transmission, traduites par une variable ε et pour une longueur F de séquence connue choisie,
La figure 7 représente la courbe de variation de la probabilité de récupération des séquences connues d'une séquence connue dans la fenêtre d'analyse en fonction de la taille F de la séquence connue, selon des conditions choisies de bruit du canal traduites par une variable ε et un nombre de symboles L entre deux occurrences successives dans le flux original de la séquence connue,
La figure 8 représente la courbe de variation de la probabilité de récupération des séquences connues d'une séquence connue dans la fenêtre d'analyse en fonction de la taille F de la séquence connue selon des conditions de bruit du canal traduites par une variable ε différente de celle de la figure 7 et le même nombre L de symboles entre deux occurrences successives dans le flux original de la séquence connue,
La figure 9 représente la courbe de variation de la probabilité de récupération des séquences connues d'une séquence connue dans la fenêtre d'analyse en fonction de la taille F de la séquence connue selon un deuxième nombre L de symboles entre deux occurrences successives de la séquence connue et des conditions de bruit du canal traduites par une variable ε choisies,
La figure 10 représente la courbe de variation de la probabilité de récupération des séquences connues d'une SP dans la fenêtre d'analyse en fonction de la taille F de la séquence connue, selon des conditions de bruit du canal traduites par une variable ε différente de celle de la figure 9 et le même nombre L de symboles entre deux occurrences de la séquence connue.

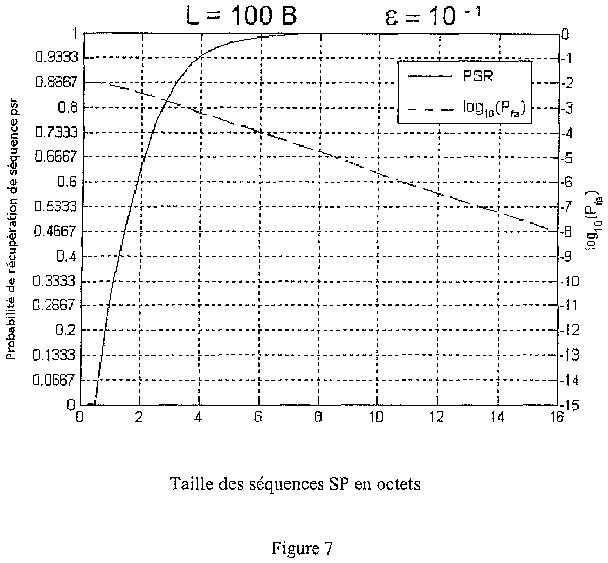

Les figures 7 à 10 illustrent également les courbes de probabilité de fausse alarme en délinéation Pfa. La réussite de la délinéation est mesurée directement par la Pfa.

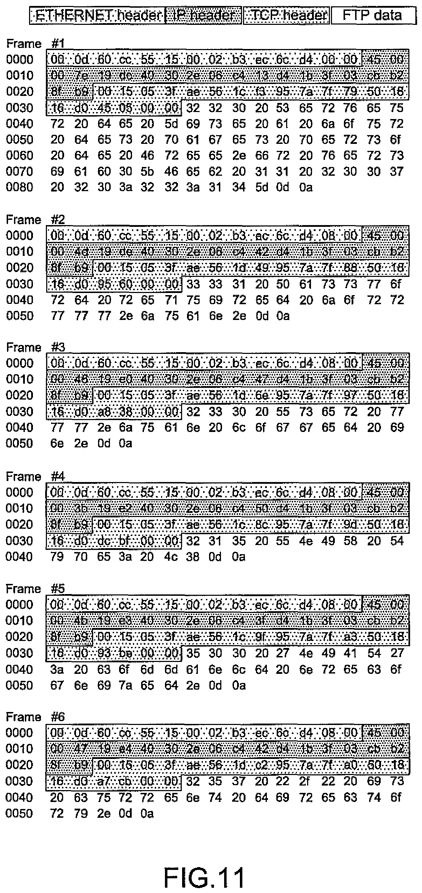

La figure 11 est une représentation hexadécimale d'une suite de paquets entrants dans le cas d'une pile protocolaire FTP/TCP/IP/Ethernet, capturée au niveau Ethernet, mettant en évidence l'existence de séquences répétées dans les informations de contrôle de chaque paquet et pouvant constituer la séquence connue SP.

Le procédé de délinéation selon l'invention s'applique aux systèmes de communication utilisant des piles de protocoles. Des exemples non exhaustifs de piles protocolaires auxquelles s'applique ce procédé sont TCP/IP ou UDP/IP. Il s'applique à tout système de communications numériques et en particulier aux systèmes de communication par satellite et aux liaisons ATM sur ADSL.

Dans un flux de données transmis par une pile protocolaire, une ou plusieurs séquences connues SP sont transmises.

Les séquences connues SP sont des séquences contenant des champs d'informations « statiques » c'est-à-dire des champs dont le contenu est constant et pouvant appris par le récepteur pour tous les paquets du flux. Dans le cas où les séquences connues comportent des champs dont le contenu est appris par le récepteur, l'apprentissage peut être réalisé en analysant les champs des entêtes des premiers paquets de données d'un flux entrant. Lors de l'apprentissage, le récepteur devine quelle séquence est utilisée, ce qui donne la possibilité d'utiliser des séquences différentes dans le flux entrant. Alternativement, les séquences SP peuvent être constituées d'une combinaison de séquences comportant des champs dont le contenu est connu du récepteur et des champs dont le contenu est appris par le récepteur. Les séquences SP peuvent être constituées de sous-ensembles de bits appartenant à différents champs d'entête de plusieurs protocoles appartenant à des couches de communication différentes comme par exemple les adresses des niveaux MAC ou IP de la source émettrice ou du récepteur, des ports TCP ou UDP, le type de protocole ou sa version. Ceci permet alors de construire une séquence connue plus longue et d'obtenir ainsi des probabilités de détection correcte nettement améliorées. Les bits d'un sous-ensemble ne sont pas obligatoirement contigus mais leur position relative dans l'entête est connue. Par ailleurs, lorsque le récepteur reçoit plusieurs flux entrants différents en parallèle, par l'intermédiaire d'un multiplexeur par exemple, le récepteur peut rechercher simultanément plusieurs séquences connues différentes, chaque séquence connue étant associée à l'un des flux.

Selon le procédé de délinéation, le flux transmis par le canal de communication C de la chaîne de transmission et entrant coté récepteur R est analysé de manière à rechercher les séquences connues SP du flux.

Les données du flux FD traitées selon le procédé peuvent être sous la forme de symboles binaires ou sous la forme de données analogiques réelles ou quantifiées.

Le procédé comporte la détermination d'un seuil de détection η de séquences connues SP. Le seuil de détection η est choisi de manière à avoir une probabilité de récupération des séquences connues PSR maximale. Le seuil choisi est de préférence un seuil optimum ηₒₚₜ, qu'il est possible d'estimer par analyse du flux reçu. Ce seuil optimum ηₒₚₜ, tient compte du nombre moyen L de symboles entre deux occurrences de la séquence connue SP dans le flux (la longueur moyenne des paquets) et de l'état du canal de communication C. L'état du canal de communication se traduit par une variable estimée ε correspondant aux conditions de bruit. La valeur de L et l'état du canal sont des valeurs estimées obtenues par exemple par un estimateur classique ou par d'autres méthodes.

Dans le cas d'erreurs introduites par la transmission, le procédé permet de détecter dans le flux des séquences similaires aux séquences connues SP attendues, c'est-à-dire des séquences identiques ou très proches, cette proximité étant établie à partir d'un critère de similarité prédéterminé; les séquences non similaires, c'est-à-dire différentes n'étant pas retenues.

Lorsqu'une séquence analysée répond au critère de similarité une séquence dite « similaire » est détectée. Ce critère de similarité est rempli lorsque la séquence analysée présente un degré de similitude avec la séquence connue SP supérieur ou égal à la limite définie par l'estimation du seuil de détection optimum ηₒₚₜ.

Le procédé comporte la détection de séquences connues SP erronées, ce qui correspond à la détection de séquences similaires.

Le procédé comporte la mémorisation de la position de ces séquences afin de déterminer une information permettant la délinéation. Cette information est par exemple la position de début d'un paquet ou une longueur entre deux séquences qui permet de déduire le début d'un paquet.

L'analyse du flux entrant FE est réalisée au moyen d'une fenêtre glissante W. La fenêtre glissante se déplace dans le flux entrant d'une position i à une position i+1 après chaque analyse d'une séquence de longueur prédéterminée F formée des symboles reçus indexés de i à i+F-1.

La mémorisation de la position consiste à enregistrer la position spatiale de séquences similaires successives détectées afin de déduire des informations telles que le début de paquets. La position spatiale des séquences similaires (ou SP) dans le flux est définie par le quantième (rang) du premier bit.

Lorsque les données du flux traitées par le dispositif de délinéation sont sous la forme de symboles, et que la séquence similaire ne commence pas au début d'un entête, on estime la position de début du paquet en déduisant de la position de la séquence similaire le nombre de symboles correspondant à ce décalage.

On mémorise le nombre de symboles entre deux détections de séquences similaires successives afin de déterminer une information de longueur entre deux séquences détectées. L'information « longueur » peut par exemple être comparée à celle obtenue par des mécanismes traditionnels.

La figure 2 représente le schéma d'un dispositif de délinéation 100 placé sur une chaîne de transmission utilisant une pile protocolaire et contenant un canal C de communication. Le dispositif 100 reçoit un flux FE de paquets de données transmis par le canal C.

La longueur moyenne estimée des paquets est L,

La taille ou longueur des séquences connues SP est F,

En sortie du canal les séquences connues SP peuvent avoir été transmises avec des erreurs, tel que cela est illustré par la séquence SPe.

Le dispositif 100 reçoit des couches supérieures 110 des informations relatives aux champs constitutifs de la séquence connue SP pour tous les paquets du flux. Ces données servent à déterminer la séquence connue SP à rechercher dans le flux par le dispositif 100.

Le dispositif 100 comporte une fenêtre W d'analyse des données reçues. La fenêtre glissante W est une fenêtre se déplaçant d'une position i à une position i+1 après chaque analyse d'une séquence de longueur prédéterminée F formée des symboles reçus indexés de i à i+F-1.

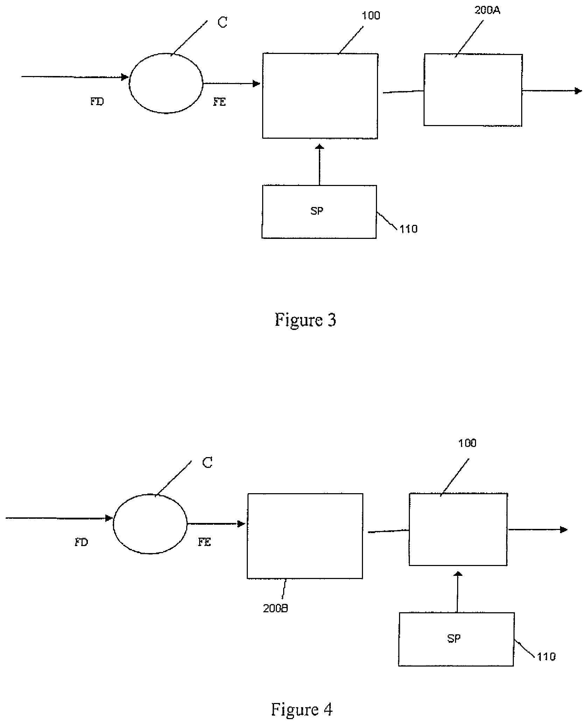

La figure 3 représente un système de communication tel que représenté sur la figure 1, comprenant un dispositif de délinéation 100 selon l'invention. Dans cet exemple de réalisation, le dispositif 100 est implanté avant le système de correction d'erreurs 200A de la chaîne de réception R.

La figure 4 représente un deuxième mode de réalisation d'un système de communication selon l'invention. Dans ce mode de réalisation, le dispositif de délinéation 100 est placé après le système de correction d'erreurs 200B.

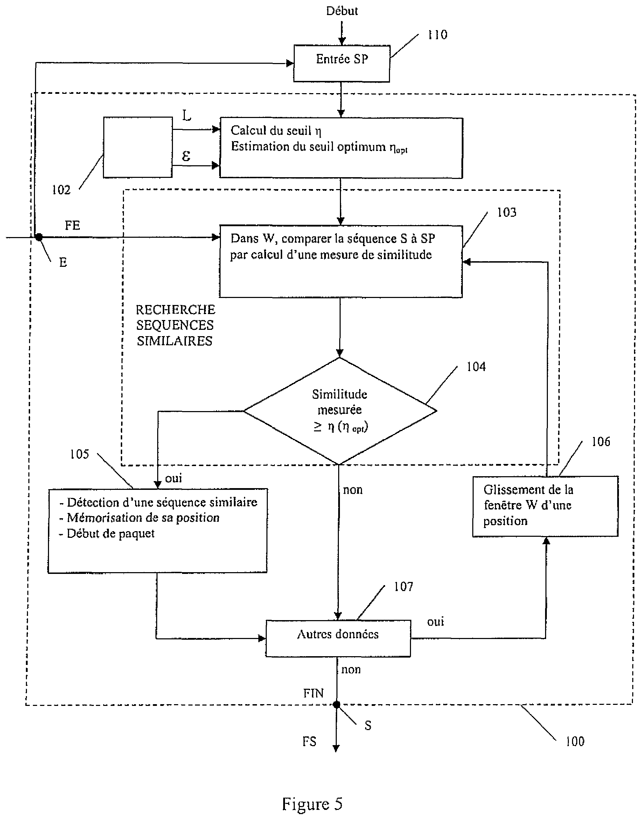

La figure 5 illustre les étapes mises en oeuvre par le dispositif de délinéation 100. Ces étapes sont décrites ci-après :
110- Les couches supérieures au niveau du récepteur R fournissent au dispositif 100 des informations relatives à la séquence connue SP du flux entrant FE afin que ce dispositif 100 procède à la recherche desdites séquences dans le flux FE.
101, 102, 103, 104 - Le dispositif 100 recherche sur le flux FE, les positions probables des séquences connues par comparaison successive de séquences de symboles avec la séquence connue SP suivant un critère prédéterminé. Les étapes mises en oeuvre sont alors les suivantes :
   101, 102- le dispositif détermine le seuil de détection d'une séquence connue, ce seuil correspondant à une similitude satisfaisante permettant de rejeter des séquences très différentes c'est-à-dire des séquences dont la similitude est inférieure au seuil. De façon pratique, le seuil de détection η de séquences connues SP est choisi de manière à maximiser la probabilité de récupération des séquences PSR connues. Le seuil choisi est une estimation d'un seuil optimum ηₒₚₜ. Ce seuil optimum ηₒₚₜ tient compte du nombre moyen de symboles L entre deux occurrences de la séquence connue (la longueur moyenne des paquets) et de l'état du canal de communication C, traduit par la variable ε représentant le taux d'erreur bit ou symbole. La valeur de L et l'état du canal sont des valeurs estimées obtenues par l'estimateur 102.
   103- le dispositif analyse la séquence présente dans la fenêtre W, en mesurant sa similitude à la séquence connue SP.
   104- le dispositif compare le seuil de détection η à la similitude mesurée.

Le dispositif 100 effectue une détection 105 de séquences connues erronées dans le cas de présence de séquences similaires c'est-à-dire les séquences dont la similitude mesurée avec la séquence connue SP est supérieure au seuil η, et mémorise la position de ces séquences et en déduit le début des paquets.

107- Le dispositif contrôle la fin du flux et fait glisser 106, la fenêtre d'analyse W d'une position.

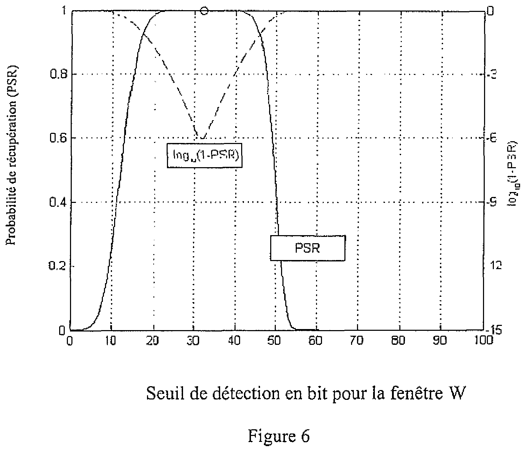

La figure 6 représente la courbe de variation PSR en fonction du seuil de détection fixé η pour une longueur F de séquence connue SP égale à 16 octets, et des conditions de bruit importantes traduites par la taux d'erreur bit ε, ε = 10⁻¹ (1 bit sur 10 erroné). Sur cette figure, la ligne en pointillés représente la distance logarithmique entre la probabilité de récupération PSR des séquences connues et 1 à savoir : log₁₀(1-PSR).

On désigne ci-après Pcd et Pfa respectivement la probabilité de détections correctes et la probabilité de fausses alarmes liées au dispositif.

Dans le cas de la mise en oeuvre du procédé sur des données intègres, ε=0, la probabilité de détections correctes Pcd = 1 et la probabilité de fausses alarmes Pfa= 2^{-8F} . Pour F égal à 4 ou 5 octets, Pfa est toujours en dessous de 10⁻¹⁰ . Pour F égal à 20 octets, Pfa est toujours en dessous de 10⁻⁴⁹.

Dans le cas d'un flux non intègre (comportant des erreurs), ε n'est pas nul. Les courbes de variations PSR des séquences connues illustrées par les figures 7 à 10 montrent différents résultats relatifs à ce cas. Sur ces figures les courbes en pointillés correspondent à la courbe 10log₁₀(Pfa), Pfa étant pratiquement égal à [(1-PSR)/(L-1)].

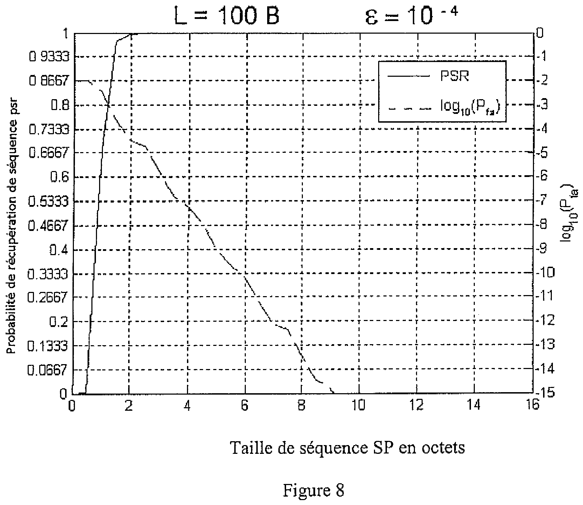

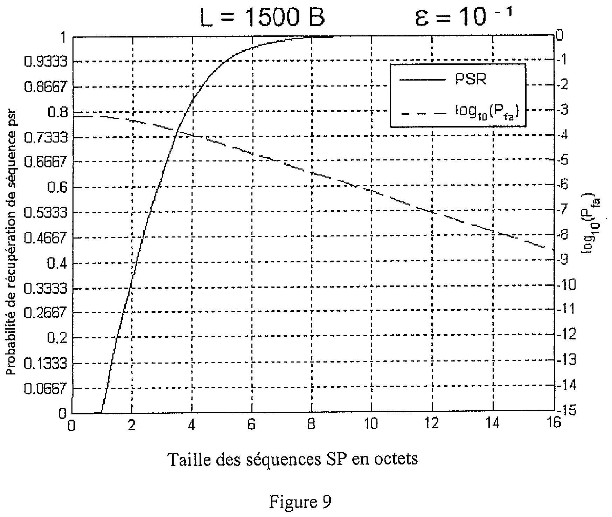

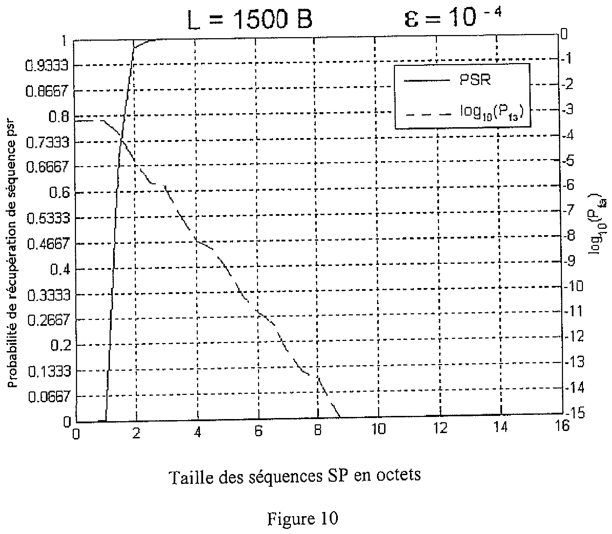

Les figures 7 et 8 illustrent les courbes de variation de PSR et Pfa d'une séquence connue SP dans la fenêtre d'analyse W respectivement pour des taux d'erreur bit ε = 10⁻¹ et ε = 10⁻⁴ , et un nombre de symboles L entre deux occurrences successives de la séquence connue SP (taille moyenne des paquets) étant de 100 octets. Les figures 9 et 10 illustrent les courbes de variation de PSR et Pfa d'une séquence connue dans la fenêtre d'analyse F, respectivement pour des taux d'erreur bit ε= 10⁻¹ et ε= 10⁻⁴ et un nombre de symboles L entre deux occurrences successives de la séquence connue SP (taille moyenne des paquets) de 1500 octets.

Ces figures montrent que même en présence d'erreurs sur le flux, la probabilité de fausses alarmes Pfa décroît rapidement avec l'augmentation de la taille des séquences SP. On peut constater également, que comme dans le cas d'un flux sans erreurs, lorsque la taille des séquences SP est classique c'est-à-dire de quelques dizaines d'octets, la Pfa est très faible.

La figure 11 illustre un exemple dans le cas d'un transfert de fichiers utilisant la pile protocolaire FTP/TCP/IP/Ethernet. Cette figure représente une extraction hexadécimale de la suite de paquets entrants capturés au niveau Ethernet. Dans l'exemple de la pile protocolaire choisie, chaque paquet comporte un entête Ethernet, un entête IP, un entête TCP, et des données du protocole FTP. Ces entêtes comportent comme on peut le voir des champs d'information constants sur tous les paquets. Il s'agit de séquences statiques, que l'on trouve réparties sur une ou plusieurs couches d'une pile protocolaire.

Le procédé exploite cette caractéristique pour rechercher des séquences connues SP à partir de la connaissance de la pile protocolaire, afin de déterminer des informations nécessaires à la délinéation. Cette recherche de SP peut bien entendu être réalisée en parallèle sur plusieurs flux (cas le plus fréquent pour la grande majorité des communications numériques).

Le procédé exploite la redondance naturelle des données générées par une pile protocolaire. Il est non intrusif comme peuvent l'être les procédés de délinéation connus. Il peut être implémenté dans tout système de communication y compris dans les systèmes de communication par satellite et ceux utilisant des liaisons ATM sur ADSL.

## Revendications

1. Procédé de délinéation d'un flux de données transmis par un système de communication utilisant une pile de protocoles multicouches, comprenant un récepteur, le procédé comportant l'étape suivante:
- la réception d'un flux de données entrant comportant des paquets de données comprenant des champs d'entête protocolaires dont le contenu est constant pour tous les paquets de données du flux,
et le procédé est **caractérisé en ce qu'**il comporte les étapes suivantes:
- la construction d'au moins une séquence SP par apprentissage à partir des champs protocolaires de contenu constant,
- la recherche et la détection, au niveau du récepteur, de séquences similaires à ladite séquence SP, les séquences non similaires n'étant pas retenues
- la détermination des positions des séquences similaires détectées,
- la mémorisation des positions des séquences similaires détectées afin de déterminer une information permettant de délinéer le flux,
- la séquence SP par apprentissage comprenant des sous-ensembles de bits appartenant à différents champs d'entête protocolaires, les sous-ensembles de bits ayant des positions relatives connues.

2. Procédé de délinéation, selon la revendication 1, **caractérisé en ce que** la mémorisation des positions des séquences similaires détectées consiste à enregistrer lesdites positions dans le flux de séquences similaires successives afin de déduire le début de paquets.

3. Procédé de délinéation, selon la revendication 2, **caractérisé en ce que** lorsque les données du flux sont sous la forme de symboles, et que l'une des séquences similaires ne commence pas au début d'un champ d'entête et comporte un décalage par rapport à ce début, le décalage correspondant à un nombre de symboles, la position de début du paquet correspondant est estimée en déduisant, de la position de ladite séquence similaire, le nombre de symboles correspondant à ce décalage.

4. Procédé de délinéation, selon l'une quelconque des revendications précédentes, **caractérisé en ce que**, on mémorise le nombre de symboles du flux de données entre deux détections de séquences similaires successives afin de déterminer une information de longueur.

5. Procédé de délinéation, selon l'une quelconque des revendications précédentes, **caractérisé en ce que** ladite séquence SP est composée de symboles contigus dans le flux entrant ou non contigus.

6. Procédé de délinéation selon l'une quelconque des revendications précédentes, **caractérisé en ce que** la recherche d'une séquence SP par apprentissage dans le flux de données entrant comprend l'ouverture d'une fenêtre d'analyse de longueur égale à la longueur F de ladite séquence SP pour l'analyse des séquences du flux circulant dans la fenêtre, le calcul d'un seuil de détection η estimant un seuil optimal ηₒₚₜ, une mesure de similitude entre une séquence analysée et ladite séquence SP, une détection d'une séquence similaire ayant lieu lorsque similitude mesurée est supérieure ou égale au seuil ηₒₚₜ.

7. Procédé de délinéation selon la revendication 6 **caractérisé en ce que** la recherche d'une séquence SP par apprentissage est réalisée en continu en faisant glisser la fenêtre d'analyse dans le flux entrant après chaque analyse d'une séquence de longueur F.

8. Procédé de délinéation selon la revendication 7, **caractérisé en ce que** le glissement de la fenêtre d'analyse correspond à un déplacement symbole par symbole, ou octet par octet, ou bit par bit, dans le flux entrant.

9. Dispositif de délinéation d'un flux de données transmis par un système de communication utilisant une pile de protocoles multicouches, le dispositif comprenant :
- une entrée pour recevoir un flux de données comportant des paquets de données comprenant des champs d'entête protocolaires dont le contenu est constant pour tous les paquets de données du flux,
et le dispositif est **caractérisé en ce qu'**il comprend:
- des moyens d'apprentissage pour construire au moins une séquence SP à partir des champs protocolaires de contenu constant,
- des moyens pour rechercher et détecter des séquences similaires à ladite séquence SP, les séquences non similaires n'étant pas retenues,
- des moyens pour déterminer des positions des séquences similaires détectées,
- des moyens pour mémoriser la position des séquences similaires détectées afin de déterminer une information permettant de délinéer le flux.

10. Dispositif de délinéation selon la revendication 9, **caractérisé en ce que** les moyens pour rechercher des séquences correspondant à la séquence SP et détecter des séquences similaires, comportent :
- une fenêtre de longueur égale à la longueur F de ladite séquence SP, pour l'analyse dans le flux des séquences circulant dans la fenêtre,
- des moyens de calcul d'un seuil de détection (ηₒₚₜ)
- des moyens de mesure de similitude entre une séquence analysée et la séquence connue et de détection d'une séquence similaire, la détection ayant lieu lorsque la similitude mesurée est supérieure ou égale au seuil (ηₒₚₜ).

11. Dispositif de délinéation selon la revendication 10, **caractérisé en ce que** la fenêtre glissante se déplace dans le flux entrant après chaque analyse d'une séquence de longueur prédéterminée F formée des symboles reçus indexés de i à i+F-1, les index i et i+F-1 correspondant aux bornes minimale et maximale fixant la longueur de la fenêtre d'analyse.

12. Dispositif de délinéation selon la revendication 11, **caractérisé en ce que** le glissement de la fenêtre d'analyse correspond à un déplacement symbole par symbole, ou octet par octet, ou bit par bit, dans le flux entrant.

13. Système de communication de flux de données comprenant un récepteur, **caractérisé en ce que** le récepteur comprend un dispositif de délinéation du flux de données reçu selon l'une quelconque des revendications 9 à 12.

14. Système de communication selon la revendication 13, **caractérisé en ce que** le dispositif de délinéation est placé avant un dispositif de correction d'erreurs de transmission.

15. Système de communication selon l'une quelconque des revendications 13 ou 14, **caractérisé en ce que** ledit système de communication est un système de communication par satellite.

16. Système de communication selon l'une quelconque des revendications 13 ou 14, **caractérisé en ce que** ledit système de communication utilise des liaisons ATM sur ADSL.

## Patentansprüche

1. Verfahren zum Abgrenzen eines von einem Kommunikationssystem mit einem mehrschichtigen Protokollstapel übertragenen Datenstroms, umfassend einen Empfänger, wobei das Verfahren den folgenden Schritt beinhaltet:
- Empfangen eines eingehenden Datenstroms, der Datenpakete umfasst, die Protokoll-Header-Felder umfassen, deren Inhalt für alle Datenpakete des Stroms konstant ist,
und das Verfahren **dadurch gekennzeichnet ist, dass** es die folgenden Schritte beinhaltet:
- Konstruieren wenigstens einer Sequenz SP durch Lernen auf der Basis von Protokollfeldern mit konstantem Inhalt;
- Suchen nach und Erkennen, am Empfänger, von ähnlichen Sequenzen wie die Sequenz SP, wobei die unähnlichen Sequenzen nicht behalten werden;
- Bestimmen von Positionen der erkannten ähnlichen Sequenzen;
- Speichern der Positionen der erkannten ähnlichen Sequenzen, um Informationen zu bestimmen, die das Abgrenzen des Stroms zulassen;
- wobei die Sequenz SP durch Lernen Teilsätze von Bits umfasst, die zu unterschiedlichen Protokoll-Header-Feldern gehören, wobei die Teilsätze von Bits bekannte relative Positionen haben.

2. Abgrenzungsverfahren nach Anspruch 1, **dadurch gekennzeichnet, dass** das Speichern der Positionen der erkannten ähnlichen Sequenzen das Aufzeichnen der Positionen in dem Strom von aufeinander folgenden ähnlichen Sequenzen beinhaltet, um den Anfang von Paketen abzuleiten.

3. Abgrenzungsverfahren nach Anspruch 2, **dadurch gekennzeichnet, dass**, wenn die Daten des Stroms in Form von Symbolen vorliegen und eine der ähnlichen Sequenzen nicht am Anfang eines Header-Feldes beginnt und relativ zu diesem Anfang verschoben ist, wobei die Verschiebung einer Anzahl von Symbolen entspricht, die Anfangsposition des entsprechenden Pakets durch Ableiten der Anzahl von dieser Verschiebung entsprechenden Symbolen von der Position der ähnlichen Sequenz geschätzt wird.

4. Abgrenzungsverfahren nach einem der vorherigen Ansprüche, **dadurch gekennzeichnet, dass** die Anzahl von Symbolen des Datenstroms zwischen zwei Erkennungen von aufeinander folgenden ähnlichen Sequenzen gespeichert wird, um Längeninformationen zu bestimmen.

5. Abgrenzungsverfahren nach einem der vorherigen Ansprüche, **dadurch gekennzeichnet, dass** die Sequenz SP aus in dem Eingangsstrom aneinander grenzenden oder nicht aneinander grenzenden Symbolen zusammengesetzt ist.

6. Abgrenzungsverfahren nach einem der vorherigen Ansprüche, **dadurch gekennzeichnet, dass** die Suche nach einer Sequenz SP durch Lernen in dem eingehenden Datenstrom das Öffnen eines Analysefensters von gleicher Länge wie die Länge F der Sequenz SP umfasst, um die in dem Fenster zirkulierenden Sequenzen des Stroms zu analysieren, wobei die Berechnung einer Erkennungsschwelle η eine optimale Schwelle ηₒₚₜ, einen Messwert der Ähnlichkeit zwischen einer analysierten Sequenz und der Sequenz SP, eine Erkennung einer ähnlichen Sequenz schätzt, die erfolgt, wenn die gemessene Ähnlichkeit gleich oder größer ist als die Schwelle ηₒₚₜ.

7. Abgrenzungsverfahren nach Anspruch 6, **dadurch gekennzeichnet, dass** die Suche nach einer Sequenz SP durch Lernen kontinuierlich durch Verschieben des Analysefensters im Eingangsstrom nach jeder Analyse einer Sequenz der Länge F erfolgt.

8. Abgrenzungsverfahren nach Anspruch 7, **dadurch gekennzeichnet, dass** das Verschieben des Analysefensters einer Symbol-für-Symbol- oder Byte-für-Byte- oder Bit-für-Bit-Bewegung im Eingangsstrom entspricht.

9. Vorrichtung zum Abgrenzen eines Datenstroms, gesendet von einem Kommunikationssystem mit einem mehrschichtigen Protokollstapel, wobei die Vorrichtung Folgendes umfasst:
- einen Eingang zum Empfangen eines Datenstroms, der Datenpakete umfasst, die Protokoll-Header-Felder umfassen, deren Inhalt für alle Datenpakete des Stroms konstant ist,
und die Vorrichtung **dadurch gekennzeichnet ist, dass** sie Folgendes umfasst:
- Lernmittel zum Konstruieren von wenigstens einer Sequenz SP auf der Basis von Protokollfeldern mit konstantem Inhalt;
- Mittel zum Suchen nach und Erkennen von der Sequenz SP ähnlichen Sequenzen, wobei die unähnlichen Sequenzen nicht behalten werden;
- Mittel zum Bestimmen der Positionen der erkannten ähnlichen Sequenzen;
- Mittel zum Speichern der Positionen der erkannten ähnlichen Sequenzen, um die Informationen zum Abgrenzen des Stroms zu bestimmen.

10. Abgrenzungsvorrichtung nach Anspruch 9, **dadurch gekennzeichnet, dass** die Mittel zum Suchen nach Sequenzen entsprechend der Sequenz SP und zum Erkennen von ähnlichen Sequenzen Folgendes umfassen:
- ein Fenster von gleicher Länge wie die Länge F der Sequenz SP, um in dem Strom die in dem Fenster zirkulierenden Sequenzen zu analysieren;
- Mittel zum Berechnen einer Erkennungsschwelle (ηₒₚₜ);
- Mittel zum Messen von Ähnlichkeit zwischen einer analysierten Sequenz und der bekannten Sequenz und zum Erkennen einer ähnlichen Sequenz, wobei die Erkennung erfolgt, wenn die gemessene Ähnlichkeit gleich oder größer ist als die Schwelle (ηₒₚₜ).

11. Abgrenzungsvorrichtung nach Anspruch 10, **dadurch gekennzeichnet, dass** sich das Gleitfenster im eingehenden Datenstrom nach jeder Analyse einer Sequenz von vorbestimmter Länge F bewegt, gebildet durch empfangene Signale, indexiert von i bis i+F-1, wobei die Indexe i und i+F-1 den Mindest- und Höchstgrenzen entsprechen, die die Länge des Analysefensters bestimmen.

12. Abgrenzungsvorrichtung nach Anspruch 11, **dadurch gekennzeichnet, dass** das Gleiten des Analysefensters einer Symbol-für-Symbol- oder Byte-für-Byte- oder Bit-für-Bit-Bewegung in dem eingehenden Strom entspricht.

13. Datenstromkommunikationssystem, das einen Empfänger umfasst, **dadurch gekennzeichnet, dass** der Empfänger eine Vorrichtung zum Abgrenzen des empfangenen Datenstroms nach einem der Ansprüche 9 bis 12 umfasst.

14. Kommunikationssystem nach Anspruch 13, **dadurch gekennzeichnet, dass** die Abgrenzungsvorrichtung vor einer Sendefehlerkorrekturvorrichtung platziert wird.

15. Kommunikationssystem nach einem der Ansprüche 13 oder 14, **dadurch gekennzeichnet, dass** das Kommunikationssystem ein Satellitenkommunikationssystem ist.

16. Kommunikationssystem nach einem der Ansprüche 13 oder 14, **dadurch gekennzeichnet, dass** das Kommunikationssystem ATM-Links auf ADSL benutzt.

## Claims

1. A method for delineating a data stream transmitted by a communication system using a multilayer protocol stack, comprising a receiver, the method comprising the following step:
- receiving an incoming data stream comprising data packets that comprise protocol header fields, the content of which is constant for all the data packets of the stream,
and the method is **characterised in that** it comprises the following steps:
- constructing at least one sequence SP by learning on the basis of the constant content protocol field;
- searching for and detecting, in the receiver, sequences similar to said sequence SP, the dissimilar sequences not being retained;
- determining positions of the detected similar sequences;
- storing the positions of the detected similar sequences in order to determine information that allows the stream to be delineated;
- the sequence SP by learning comprising sub-sets of bits belonging to different protocol header fields, the sub-sets of bits having known relative positions.

2. The delineating method as claimed in claim 1, **characterised in that** storing the positions of the detected similar sequences involves recording said positions in the stream of successive similar sequences in order to deduce the start of packets.

3. The delineating method as claimed in claim 2, **characterised in that** when the data of the stream is in the form of symbols and that one of the similar sequences does not begin at the start of a header field and comprises a shift relative to this start, the shift corresponding to a number of symbols, the start position of the corresponding packet is estimated by deducing, from the position of said similar sequence, the number of symbols corresponding to this shift.

4. The delineating method as claimed in any one of the preceding claims, **characterised in that** the number of symbols of the data stream between two detections of successive similar sequences is stored in order to determine length information.

5. The delineating method as claimed in any one of the preceding claims, **characterised in that** said sequence SP is made up of symbols contiguous in the incoming stream or non-contiguous symbols.

6. The delineating method as claimed in any one of the preceding claims, **characterised in that** the search for a sequence SP by learning in the incoming data stream comprises opening an analysis window of equal length to the length F of said sequence SP in order to analyse the sequences of the stream circulating in the window, the computation of a detection threshold η estimating an optimal threshold ηₒₚₜ, a measurement of similarity between an analysed sequence and said sequence SP, a detection of a similar sequence occurring when the measured similarity is greater than or equal to the threshold ηₒₚₜ.

7. The delineating method as claimed in claim 6, **characterised in that** the search for a sequence SP by learning is performed continuously by sliding the analysis window in the incoming stream following each analysis of a sequence of length F.

8. The delineating method as claimed in claim 7, **characterised in that** the sliding of the analysis window corresponds to a symbol-by-symbol or byte-by-byte or bit-by-bit movement in the incoming stream.

9. A device for delineating a data stream transmitted by a communication system using a multilayer protocol stack, the device comprising:
- an input for receiving a data stream comprising data packets that comprise protocol header fields, the content of which is constant for all the data packets of the stream,
and the device is **characterised in that** it comprises:
- learning means for constructing at least one sequence SP on the basis of the constant content protocol field;
- means for searching for and detecting sequences similar to said sequence SP, the dissimilar sequences not being retained;
- means for determining positions of the detected similar sequences;
- means for storing the positions of the detected similar sequences in order to determine information that allows the stream to be delineated.

10. The delineating device as claimed in claim 9, **characterised in that** the means for searching for sequences corresponding to the sequence SP and for detecting similar sequences comprise:
- a window of equal length to the length F of said sequence SP in order to analyse, in the stream, the sequences circulating in the window;
- means for computing a detection threshold (ηₒₚₜ);
- means for measuring similarity between an analysed sequence and the known sequence and for detecting a similar sequence, the detection occurring when the measured similarity is greater than or equal to the threshold (ηₒₚₜ).

11. The delineating device as claimed in claim 10, **characterised in that** the sliding window moves in the incoming stream following each analysis of a sequence of predetermined length F formed by received signals indexed from i to i+F-1, the indices i and i+F-1 corresponding to the minimum and maximum limits establishing the length of the analysis window.

12. The delineating device as claimed in claim 11, **characterised in that** the sliding of the analysis window corresponds to a symbol-by-symbol or byte-by-byte or bit-by-bit movement in the incoming stream.

13. A data stream communication system comprising a receiver, **characterised in that** the receiver comprises a device for delineating the received data stream as claimed in any one of claims 9 to 12.

14. The communication system as claimed in claim 13, **characterised in that** the delineation device is placed upstream of a transmission error correction device.

15. The communication system as claimed in any one of claims 13 or 14, **characterised in that** said communication system is a satellite communication system.

16. The communication system as claimed in any one of claims 13 or 14, **characterised in that** said communication system uses ATM-links on ADSL.
